# EUROPEAN PATENT SPECIFICATION

(11) **EP 1 149 386 B1**
(45) Date of publication and mention of the grant of the patent: **21.07.2004**
(21) Application number: 99965633.3
(22) Date of filing: 10.12.1999
(51) Int. Cl.: G21C 3/18, G21C 3/16

(54) **FUEL ASSEMBLY**
BRENNSTABBÜNDEL
ASSEMBLAGE COMBUSTIBLE

(30) Priority: 23.12.1998 SE 9804545
(43) Date of publication of application: 31.10.2001
(73) Proprietor: Westinghouse Electric Sweden AB, 721 83 Västeras (SE)
(72) Inventor: NYLUND, Olov, S-723 55 Väster s (SE)
(74) Representative: Berglund, Stefan
(86) International application number: PCT/SE1999/002310
(87) International publication number: WO 2000/039807

(56) References cited:
- EP-A1- 0 514 121
- WO-A1-96/20483
- SE-C2- 504 128
- SE-C2- 508 645
- US-A- 3 671 393

## Description

The present invention relates to a fuel assembly for a light-water nuclear reactor according to the preamble of claim 1. Such a fuel assembly is dislosed in WO97/49092.

### BACKGROUND ART

In a nuclear reactor, moderated by means of light water, the fuel occurs in the form of fuel rods. Each one of the fuel rods contains a stack of pellets of a nuclear fuel material, arranged in a cladding tube, a column with extruded fuel cylinders, or an uninterrupted column of vibration-compacted fuel powder. The cladding tube is normally made of a zirconium-based alloy. A fuel bundle comprises a plurality of fuel rods arranged in parallel with each other in a certain definite, normally symmetrical pattern, a so-called lattice. The fuel rods are retained at the top by a top tie plate and at the bottom by a bottom tie plate. For keeping the fuel rods spaced from each other and prevent them from bending or vibrating when the reactor is in operation, a number of spacers are distributed along the fuel bundle in the longitudinal direction. A fuel assembly comprises one or more fuel bundles, each of which extends along the main part of the length of the fuel assembly.

The fuel assembly, together with a plurality of other fuel assemblies, is arranged in a core. The core is immersed into water which serves both as coolant and as neutron moderator.

During operation, water flows from below and up through the fuel assembly, whereby, in a boiling water light-water reactor, part of the water is transformed into steam. The percentage of steam increases towards the top of the fuel assembly. Consequently, the coolant in the lower part of the fuel assembly includes water whereas the coolant in the upper part of the fuel assembly includes both steam and water.

During nuclear fission of the nuclear fuel material, fission gases are formed. In addition, the column of the fuel material expands due to the heat formed in the fuel material. To take care of the fission gases and the thermal expansion of the fuel pellets column, in known full-length fuel rods, that is, fuel rods of the order of size of 4 metres long, normally a relatively large space, axial gap, is formed above the uppermost fuel pellet in the cladding tube. The axial gap is of the order of size of 200-300 mm long. The fission gases may thus diffuse to this axial gap and the column of fuel pellets may expand into this.

US 3,671,393 describes a fuel assembly comprising fuel rods each of which includes a cladding tube containing a column of fuel material. In the column of fuel material, a spacer is arranged, separated from the fuel material, for the purpose of dividing the column of fuel material into elongated segments. At least one end of the spacer is formed so as to have a low crush resistance, whereby the elongated segments are allowed to expand in the longitudinal direction of the cladding tube by deformation of the spacer.

The above-described difference between the upper and lower parts of a fuel assembly with respect to coolant in the form of water in the lower part of the fuel assembly and coolant as steam and water in the upper part of the fuel assembly gives rise to special conditions which must be taken into consideration when designing the fuel assembly.

The difference between the upper and lower parts of the fuel assembly may, for example, be taken into consideration through a flexible fuel assembly which in a simple manner may be given an embodiment where the upper part of the fuel assembly differs from the lower part such that optimum conditions may be obtained. A fuel assembly for a boiling water reactor with these properties is disclosed in PCT/SE95/01478 (Int. Publ. No. WO 96/20483). This fuel assembly comprises a plurality of fuel units stacked on top of each other, each of which comprising a plurality of fuel rods extending between a top tie plate and a bottom tie plate. Each fuel unit is in the order of size of 300-1500 millimetres long. Also in this case, an axial gap must be arranged in the fuel material for taking care of fission gases and thermal expansion of the fuel material. The fuel units are surrounded by a common fuel channel with a substantially square cross section. A fuel assembly of this type may in a simple manner be given various embodiments in its upper and lower parts.

Also in a light-water reactor of pressurized-water type, it may be suitable to design the fuel assemblies such that each fuel assembly comprises a plurality of fuel units stacked on top of each other. As described above, each one of the fuel units then comprises a plurality of fuel rods extending between a top tie plate and a bottom tie plate. However, a fuel assembly for a pressurized-water reactor does not comprise any fuel channel.

One factor which must be taken into account when designing axial gaps in full-length as well as short fuel rods is that the temperature of the cladding tube in the region around the axial gap is lower than in the rest of the cladding tube since no fissionable material is arranged in the axial gap. A problem which may arise as a result of this is that hydrogen formed, inter alia in case of corrosion of the cladding tube, which normally if of a zirconium-based alloy, and is taken up thereby, diffuses into this colder region. In the case where the concentration of hydrogen becomes too high in this region, it forms hydrides in the cladding material and causes embrittlement thereof. In a serious case, holes may form in the cladding tube and fissionable material may enter into the cooling water. The same type of problems may also arise in the regions between longitudinal segments of fuel material which, in US 3,671,393, includes spacers, as well as in the region between two fuel units stacked on top of each other, as in PCT/SE95/01478. The risk of embrittlement because of too high a concentration of hydrogen increases, to a certain limit, with the size of the axial gap.

Released fission gas contributes to the temperature in the axial gap falling further. This is due to the fact that the fission gas deteriorates the thermal conductivity of the gas which is located in the axial gap. The same thing is true of the gas which is located in the gap which is formed between the fuel material and the cladding tube, whereby the difference in temperature between the outer surface of the fuel material and the inner surface of the cladding tube increases.

It is known to reduce the release of fission gas in various ways. One such way is to provide one of the fuel pellets, in a column of fuel material which is divided into fuel pellets, with through-holes in the longitudinal directions of the fuel pellets. In this way, the temperature in each fuel pellet is reduced, whereby the release of fission gas is reduced and the axial gap in the pellets column may be reduced. In this way, the axial gap may be limited to the order of size of a few millimetres in a rod with a length of the order of size of 300 millimetres, up to some twenty or thirty millimetres for longer rods, to allow the thermal expansion of the column of fuel pellets. A disadvantage with pellets provided with through-holes is that they are complicated to manufacture. For that reason, it is desirable to arrange axial gaps in the fissionable material.

Another factor which must be taken into account when designing axial gaps in a fuel rod is that local power peaks arise here. The power peaks arise because the moderation in this region, where there is no fissionable and neutron-absorbing material, is very good. This results in the power in the fuel material adjoining the axial gap becoming very high, that is, a power peak arises. The power peak increases with the size of the axial gap.

WO97/49092 discloses a fuel assembly for a light-water reactor. The fuel assembly comprises a plurality of fuel rods extending between a top tie plate and a bottom tie plate. Each fuel rod comprises a cladding tube with a first and a second end. The cladding tube thus surrounds a column of fissionable material divided into a plurality of fuel pellets. An axial gap is between two adjecent ones of the fuel pellets. The axial gap is maintained by means of deformable and separate spacer element.

The object of the present invention is to suggest a fuel assembly with a plurality of full-length fuel rods and possibly part-length fuel rods and a fuel assembly comprising a plurality of short fuel units, respectively, each having fuel rods where one or more of the fuel rods are designed with axial gaps in the fissionable fuel material for the purpose of minimizing power peaks.

### SUMMARY OF THE INVENTION, ADVANTAGES

The object is achieved by the fuel assembly initially defined, which comprises the features of the characterizing portion of claim 1.

The present invention relates to a fuel assembly comprising a plurality of fuel rods. Each fuel rod includes a column of fissionable fuel material surrounded by a cladding tube. A plurality of axially distributed gaps are arranged in the column of the fuel material for receiving fission gases formed during operation and for allowing thermal expansion of the fuel material in the longitudinal direction of the cladding tube.

In this embodiment of the invention, the nuclear fuel material is divided into a plurality of substantially circular-cylindrical pellets, arranged stacked on top of each other in the cladding tube. The cladding tube is sealed by a plug at each end, more precisely by a top plug and a bottom plug.

The majority of the pellets in the column of the fuel material are, at each end, formed with at least two projections of fuel material, graphite, metal or an oxide which differs from the fuel material. The projections extend from the end of the pellet and in its longitudinal direction. Preferably, the projections are arranged peripherally at the pellet end, that is, at a radially outer part of the pellet end. The projections are formed distinctive, pointed, with a cross-section area which decreases with the distance from the pellet end. The distinctive, pointed shape of the projections aim at preventing the projections from influencing each other. In the case where two projections at a first pellet end are arranged against a second pellet end, which in turn is provided with two projections which are arranged against the first pellet end, four separate contact points are obtained between the two pellets. The extent of the projections in the longitudinal direction defines the distance between two pellet ends, that is, the axial gap between two pellets. An axial gap formed in this way is, at least in part, deformable. Upon thermal expansion of the fuel material in the longitudinal direction of the pellets, the material in the projections, and/or in the respective pellet ends, is compressed whereby the axial gap is deformed, reduced. By not allowing the projections to be totally deformed, part of the axial gap remains for receiving fission gases.

In an advantageous embodiment of the invention, the projections described are arranged at each end of all of the pellets in the pellets column. In this way, each one of the axial gaps may be made considerably smaller than if only a small number of gaps are arranged in the fuel rod, whereby power peaks, due to axial gaps in the nuclear fuel material, are minimized.

To further reduce the power peaks at the upper and lower ends of the fuel rods, respectively, that is, between two fuel units stacked on top of each other, the fuel pellets in these regions may be formed with a smaller diameter than the other fuel pellets. To avoid annular gaps between the fuel pellet and the cladding tube, that part of the fuel rod which surrounds the fuel pellet and the cladding tube is formed with a correspondingly smaller diameter which has the same extent in the axial direction as the fuel pellet. Alternatively, the fuel pellets in this region may be given a lower enrichment.

In an alternative embodiment of the invention, the fuel rod comprises, between the main part of the pellets in the column of fuel material, a spacing member separated from the pellets. The spacing member is, for example, made of graphite, of metal, or of a porous ceramic. The spacing member is either formed to be arranged centrally between two pellets or peripherally between two pellets, that is, between the radially outer parts of the respective pellet end. Preferably, the spacing member is arranged between each pellet in the pellets column. Preferably, no spacing member is arranged between the upper pellet in the pellets column and the top plug and between the lower pellet in the pellets column and the bottom plug, respectively.

One advantage of the invention is that axial gaps are avoided in the upper and lower parts, respectively, of the fuel rods. In the case where the fuel rods are arranged in a plurality of short fuel units stacked on top of each other, the region without fissionable material, formed between two fuel units stacked on top of each other, and hence also the local power peak, which may arise in this region because of too good moderation, are reduced.

Another advantage is that the necessary axial gap may be distributed along the pellets column in such a way that a large number of axial gaps are obtained, for example an axial gap between each pellet, whereby the power peaks in the axial gaps are minimized. At the same time, the risk of too high a concentration of hydrogen in the axial gaps is reduced.

One advantage of arranging the spacing members peripherally between the pellets is that the spacing member contributes, at least to a certain extent, to the temperature in the material surrounding the axial gap being somewhat increased in comparison with the temperature of the axial gap without a spacing member. The increased temperature is due to the fact that the spacing member conducts part of the heat, generated in the pellets facing the axial gap, to the cladding tube. Because of this increased temperature, the risk of the hydrogen concentration becoming too high in the axial gaps is further reduced.

A further advantage is that the spacing member and the projections, respectively, even during the manufacture of the fuel rods, may accumulate a certain length tolerance of the pellets column. This is achieved by compressing the pellets column to a certain extent when inserting the top plug into the cladding tube, with the aid of the deformed spacing members and the projections, respectively. This implies that the requirement for the length tolerance of the individual fuel pellets is reduced.

### BRIEF DESCRIPTION OF THE DRAWINGS

Figure 1 shows, in a vertical section, a fuel assembly of boiling water type with short fuel units.
Figure 2 shows a section A-A of the fuel assembly of Figure 1.
Figures 2a and 2b show alternative embodiments of a fuel assembly of the same type as that shown in Figure 1, in a section corresponding to A-A of the fuel assembly of Figure 1.
Figure 3 shows, in a vertical section, a fuel assembly of pressurized-water type with short fuel units.
Figure 4 shows a fuel assembly for a fuel unit according to Figure 1 or 2 with a plurality of axial gaps distributed in the longitudinal direction of the fuel rod.
Figure 5a shows a fuel pellet in a section B-B in Figure 5b, comprising projections. Figure 5b shows the same fuel pellet in a view from above.
Figure 6a shows a fuel rod in a section C-C in Figure 6b, with a plurality of axial gaps in which spacing members are arranged peripherally between the fuel pellets.
Figure 7 shows fuel rod with a plurality of axial gaps in which spacing members are arranged centrally between the fuel pellets.
Figure 8 shows, in a vertical section, a fuel assembly of boiling water type with full-length and part-length fuel rods.
Figure 9 shows an alternative embodiment of a fuel rod comprising a plurality of sections with varying outside diameters.

### DESCRIPTION OF THE PREFERRED EMBODIMENTS

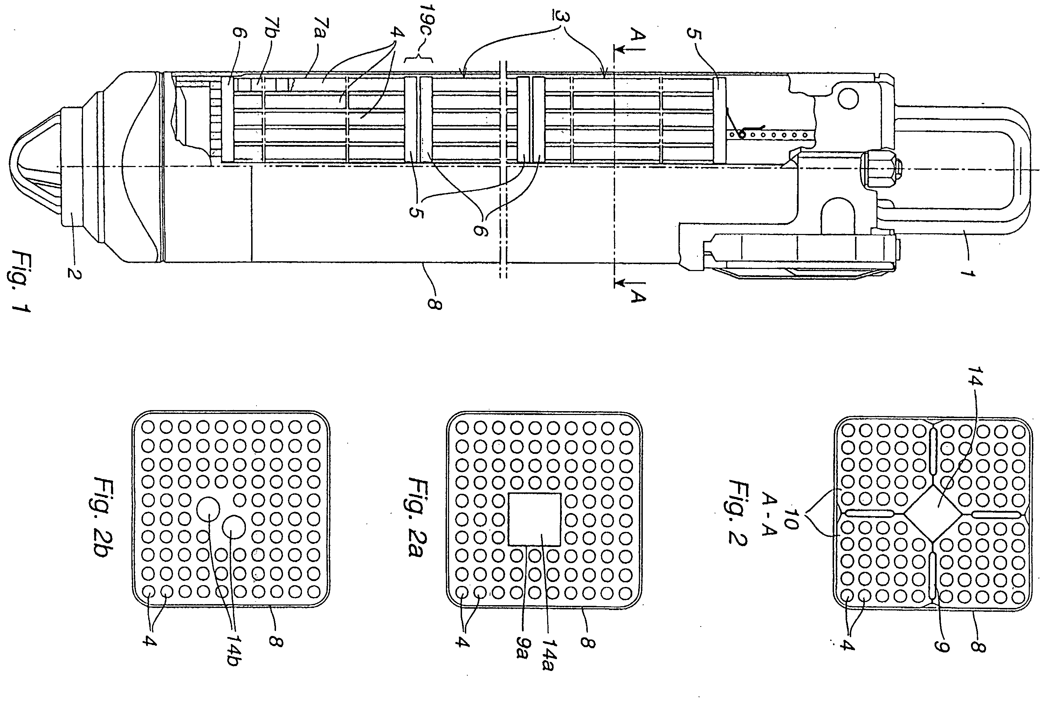

Figure 1 shows a particularly advantageous embodiment of the invention. More precisely, Figure 1 shows a boiling water fuel assembly which comprises an upper handle 1, a lower end portion 2 and a plurality of fuel units 3 stacked on top of each other. Each fuel unit 3 comprises a plurality of fuel rods 4 arranged in parallel and at definite distances from one another in a given lattice. Each fuel unit 3 further comprises a top tie plate 5 and a bottom tie plate 6 for attachment of the fuel rods 4 in their respective positions in the lattice. The fuel units 3 are stacked on top of each other in the longitudinal direction of the fuel assembly and they are stacked in such a way that the top tie plate 5 in one fuel unit 3 is facing the bottom tie plate 6 in the next fuel unit 3 in the stack, and such that the fuel rods 4 in all the fuel units 3 are parallel to one another. A fuel rod 4 comprises fuel in the form of a stack of fuel pellets 7b of uranium, arranged in a cladding tube 7a. The cladding tube 7a is suitably made of a zirconium-based alloy. A coolant is adapted to flow from below and up through the fuel assembly.

Figure 2a shows that the fuel assembly is enclosed in a fuel channel 8 with a substantially square cross section. The fuel channel 8 is provided with a hollow support member 9, of cruciform cross section, which is secured to the four walls of the fuel channel 8. In the central channel 14 formed by the support member 9, moderator water flows. The fuel channel with the support member surrounds four vertical channel-formed parts 10, so-called sub-channels, with an at least substantially square cross section. The four sub-channels each comprise a stack of fuel units 3. Each fuel unit 3 comprises 24 fuel rods 4 arranged in a symmetrical 5x5 lattice.

The fuel assembly in Figure 2 comprises 10x10 fuel rod positions. By a fuel rod position is meant a position in the lattice. All the fuel rod positions in the lattice need not be occupied by fuel rods 4. In certain fuel assemblies, a number of fuel rods 4 have been replaced by one or more water channels. The introduction of a water channel changes the number of fuel rods 4 but not the number of fuel rod positions.

Figure 2a shows an alternative embodiment of a fuel assembly according to the invention. Figure 2a shows a horizontal section through the fuel assembly which is provided with an internally arranged vertical channel 14a through which water is conducted in a vertical direction from below and upwards through the fuel assembly. The channel 14a is surrounded by a tube 9a with a substantially square cross section. The fuel units 3 are kept in position by being fitted onto the tube which surrounds the vertical channel.

Figure 2b shows an additional embodiment of a fuel assembly according to the invention. The figure shows a horizontal section through the fuel assembly which is provided with two centrally arranged vertical water rods 14b through which water is conducted from below and upwards through the fuel assembly. The water rods 14 have a diameter which is somewhat larger than the diameter of the fuel rods 4 and are formed with a substantially circular cross section. The fuel units 3 are kept in position by being fitted onto the water rods 14b.

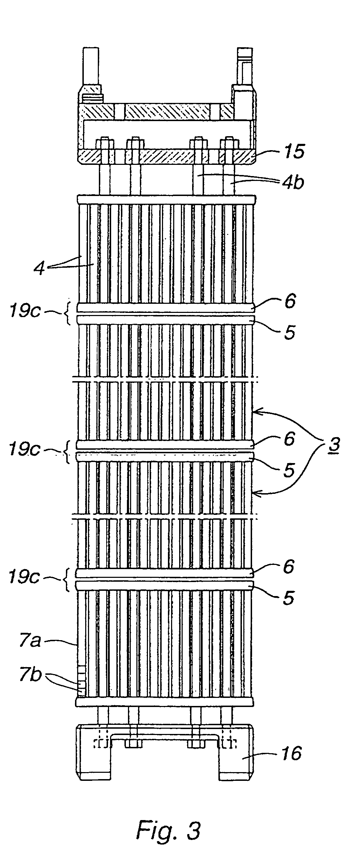

Figure 3 shows a fuel assembly of pressurized-water type which has a square cross section. In the same way as the fuel assembly in Figure 1, it comprises a plurality of fuel units 3 stacked on top of each other. Each fuel unit 3 comprises a plurality of fuel rods 4 arranged in parallel and at definite distances from one another in a given lattice. Each fuel unit 3 further comprises a top tie plate 5 and a bottom tie plate 6 for attachment of the fuel rods 4 in their respective positions in the lattice. The fuel units 3 are stacked on top of each other in the longitudinal direction of the fuel assembly and they are stacked in such a way that the top tie plate 5 in one fuel unit 3 is facing the bottom tie plate 6 in the next fuel unit 3 in the stack, and such that the fuel rods 4 in all the fuel units 3 are parallel to one another. A fuel rod 4 comprises fissionable material in the form of a stack of fuel pellets 7b of uranium arranged in a cladding tube 7a. A coolant is adapted to flow from below and up through the fuel assembly. A number of so-called control rod guide tubes 4b are arranged extending through the whole fuel assembly. The control rod guide tubes 4b are intended to receive finger-shaped control rods (not shown) which are respectively inserted into and extracted from the guide tubes 4a for the purpose of controlling the power of the nuclear reactor. The guide tubes extend between a top part 15 and a bottom part 16. The top part 15 is arranged above the uppermost fuel unit 3 in the fuel assembly and the bottom part 16 is arranged below the lowermost fuel unit 3 in the fuel assembly. The fuel units 3 are kept in position by being fitted onto the control rod guide tubes 4b.

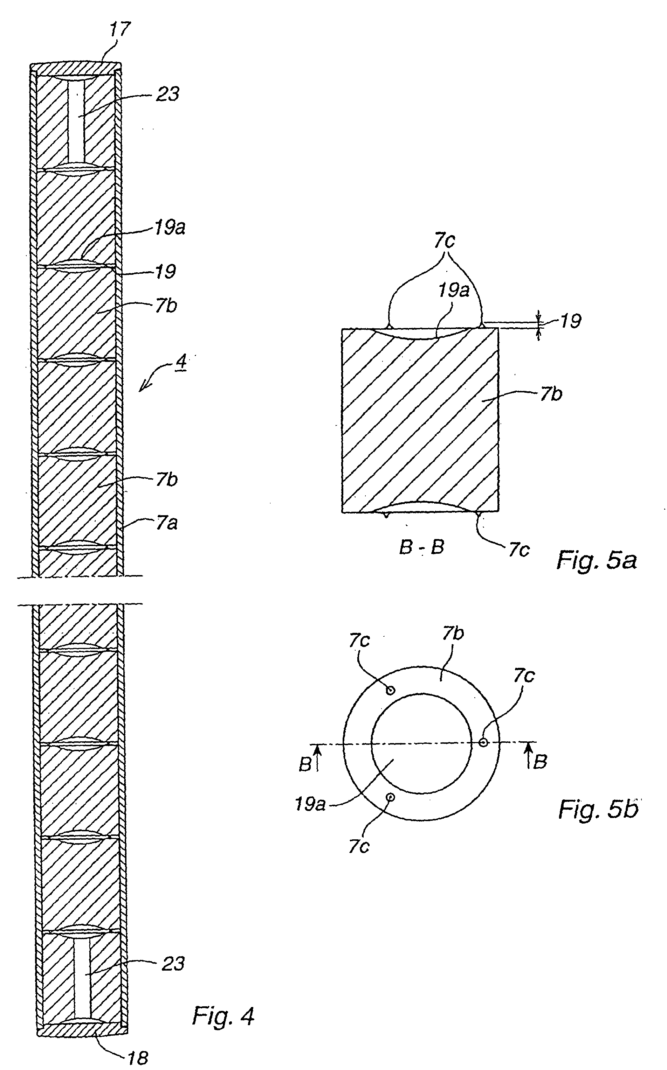

Figure 4 shows part of a fuel rod 4 for a fuel assembly according to Figure 1, 2 or Figure 3. The fuel rod 4 comprises, as mentioned above, a cladding tube 7a and a stack of fuel pellets 7b arranged therein. The cladding tube 7a is sealed at the top by a top plug 17 and at the bottom by a bottom plug 18. The fuel rod 4 is formed with a plurality of internal cavities, axial gaps 19, which are intended to accumulate fission gases and which are also intended to allow thermal expansion of the column of fuel pellets 7a.

Figures 5a and 5b show a fuel pellet which, at each end, is provided with projections 7c. In the embodiment shown, the fuel pellet is provided with three projections at each of the ends of the fuel pellet. The projections 7c are preferably formed in the material of the fuel pellet. The projections 7c are then achieved, for example, during manufacture of the pellet 7b, by pressing of the fuel material in a mould comprising the projections 7c and a subsequent sintering. In the case where the projections 7c are made of a material different from that of the fuel material, for example a metal, graphite or an oxide which differs from the fuel material, the projections 7c are arranged for the pellet 7b after the pellet 7b has been pressed and sintered. The projections 7c may then, for example, be arranged for the pellet 7b by means of plasma spraying, gas deposition technique or so-called sputtering technique.

The projections 7c are placed at the periphery of the fuel pellet and in such a way that the distance between them is substantially even. The axial extent of the axial gaps 19 is defined, at least initially, by the extent of the projections 7c in the longitudinal direction of the fuel rod. Two fuel pellets 7b arranged adjacent to each other are placed such that the projections 7c of one fuel pellet 7b do not make contact with the projections 7c of an adjacently located fuel pellet 7b. By forming the projections 7c distinctive, that is, small both in the longitudinal and transverse directions of the pellet 7b, a shape is obtained which automatically prevents projections 7c in two adjacent pellets 7b from being arranged making contact with each other. In the event that the tips of two projections 7c should be arranged against each other, they would influence each other such that the pellets 7b would be rotated in relation to each other, whereby the projections 7c in the respective pellet 7b slide against each other such that the distance between the pellets will substantially correspond to the extent of a projection 7c in the longitudinal direction. Further, the distinctive shape of the projections 7c implies a small contact surface, whereby the force necessary for deforming the projections and reducing the extent of the axial gap 19 in the longitudinal direction of the fuel rod only has to be moderate. In the event that the column of fuel pellets 7b expands due to thermal expansion, the axial gaps 19 are reduced by the projections 7c and/or the pellets ends, in or against which the projections 7c are arranged, being deformed.

In a preferred embodiment, the fuel pellets 7b are formed with cupped upper and lower end surfaces (see reference numeral 19a). Because of the thermal expansion, the fuel pellets 7b grow more in the central, warmer parts than in the outer, colder parts. The cupped shape 19a thus allows thermal expansion to a certain extent before the axial gap 19 is utilized for this purpose. Further, the cupped shape 19 entails a space in which fission gases may be accumulated.

Because of the cupped shaped 19a of the fuel pellets 7b, a smaller axial gap 19, that is, the distance between the peripheral parts of the pellet ends, is sufficient for the thermal expansion and for accumulation of the released fission gases. The cupped shape 19a is formed during pressing of the fuel material into a fuel pellet, whereupon the pressed pellet is sintered.

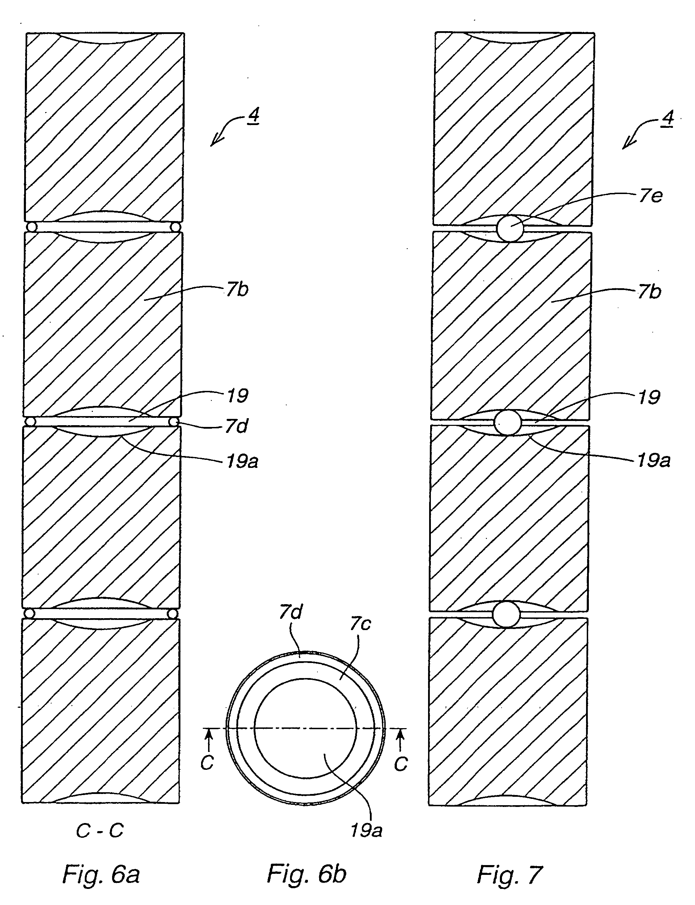

Figures 6a, 6b show an alternative embodiment of the present invention. Figure 6 more precisely shows a stack of fuel pellets 7b where a spacing member 7d is arranged peripherally between each fuel pellet 7b. As is clear from Figure 6b, the spacing member 7d is formed as an annular member with an arbitrary cross-section area. The spacing member 7d is preferably made of a material which is deformable in relation to the fuel material in the fuel pellets. Preferably, the material in the spacing member substantially includes graphite. The material in the spacing member may alternatively, for example, consist of a metal or a porous ceramic.
One advantage of this embodiment is that the heat transfer between the peripheral spacing member and the cladding tube 7a is improved in comparison with the embodiments shown in Figures 4 and 7.

Figure 7 shows an embodiment of the invention. More precisely, Figure 7 shows a stack of fuel pellets 7b where a spacing member 7e is arranged centrally between each fuel pellet 7b. The spacing member 7e is substantially formed as a ball-shaped member. Like the embodiment described with reference to Figure 6, the ball-shaped member is of a material which is deformable in relation to the fuel material in the fuel pellets. Preferably, the material in the spacing member substantially includes graphite. The material in the spacing member may alternatively, for example, consist of a metal or a porous ceramic.

By dividing the axial gap in a fuel rod into a plurality of axial gaps 19, 19a, arranged between the main part of the fuel pellets 7b, the risk of power peaks and cladding damage associated therewith is minimized. In addition, a possibility for the fuel pellets 7b of growing in the axial direction, because of thermal expansion, is permitted. Since thermal expansion is taken care of between the main part of the number of fuel pellets 7b, dimensioning of the pellets column is permitted such that, when inserting the top plug into the cladding tube, it is compressed so that a very small axial gap 19 is obtained between the top plug 17 and that pellet end which is arranged facing the top plug 17. In this way, the risk of axial gaps 19 forming between the top plug 17 and the uppermost fuel pellet 7b in the column is minimized.

Figure 4 indicates that the uppermost and lowermost pellet 7b in the fuel rod 4, respectively, are made with through-holes 23. With this embodiment, the maximum temperature in the fuel pellets 7b may be reduced in the region where power peaks due to good moderation occur, that is, in the gaps 19c between the fuel units 3 (see Figures 1 and 3). At the same time, the amount of released fission gas may be reduced and space for accumulation of released fission gases be created inside the pellets 7b.

The invention also relates to a fuel assembly which comprises at least one fuel rod according to the invention. In another embodiment of the invention, the fuel rods of the type shown in Figure 4, 6 or 7 are arranged in a bundle for a fuel assembly. In still another embodiment of the invention, all the fuel rods are of the same type, that is, either of the type as shown in Figure 4, 6 or 7, and in another embodiment of the invention the fuel assembly comprises fuel rods of at least two different types where at least two of the types consist of the fuel rods shown in Figure 4, 6 or 7.

A fuel unit 3 which is of the order of size of 400 millimetres long comprises fuel rods 4 which are provided with axial gaps 19 between at least the main part of the fuel pellets. In the case where the fuel pellets 7b in the longitudinal direction have a length of the order of size of 10 mm, the deformable part of the axial gap 19 has an extent in the longitudinal direction of the fuel rod of 0.1-0.2 millimetres. This gives a total axial length of the deformable part of the axial gap corresponding to 1-2% of the total length of the fuel rod 4.

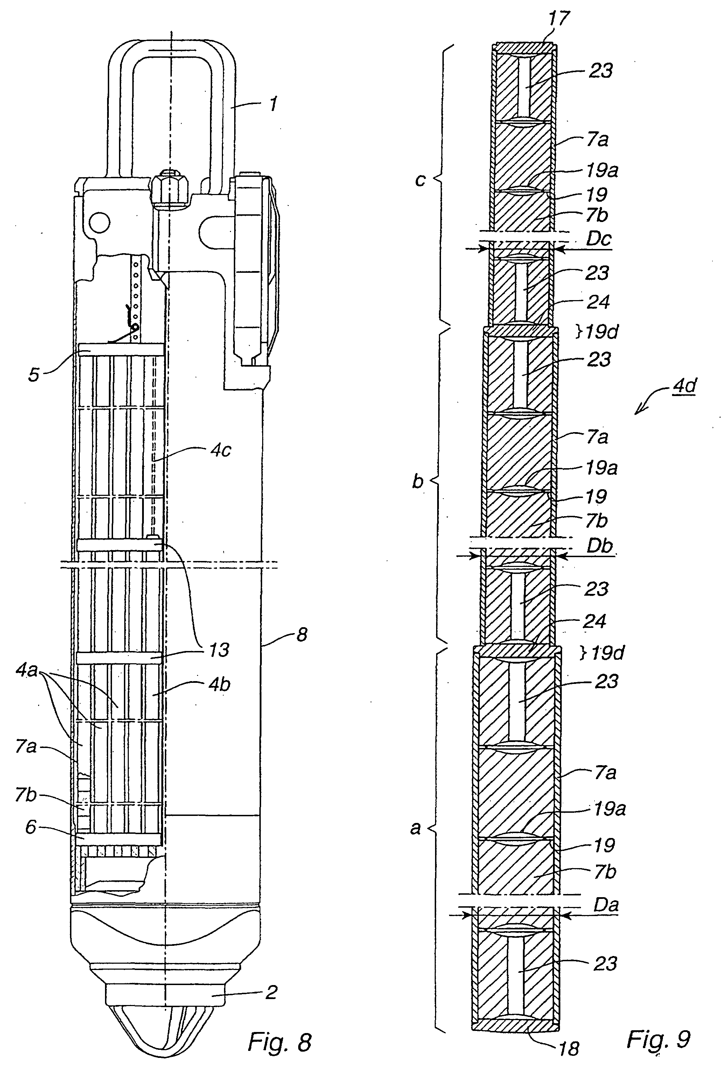

Figure 8 shows another alternative embodiment of the invention. More precisely, Figure 8 shows a fuel assembly of boiling water type where parts corresponding to parts of the fuel assembly shown in Figure 1 have been given the same reference numerals. In a cross section the fuel assembly in Figure 8 is, for example, formed in a manner corresponding to that shown in Figures 2, 2a and 2b, respectively. The fuel assembly shown in Figure 8 comprises full-length fuel rods 4a. In one embodiment of the invention, at least one of the full-length fuel rods 4a is replaced by a part-length fuel rod 4b. The part-length fuel rod 4b is arranged in the bottom tie plate 6 and extends in a direction towards the top tie plate 5 without reaching the same. The fuel rods 4a, 4b are kept spaced apart by means of conventional spacers 13.

In a further alternative embodiment of the invention, the part-length fuel rod 4b is provided with an extension which is indicated in dashed lines in the figure and provided with reference numeral 4c. The extension 4c extends from the upper end of the part-length fuel rod 4b and to the top tie plate 5. The extension 4c does not comprise any fuel material. In a manner corresponding to that described with reference to Figures 4-7, the column of fuel material in these embodiments of the invention comprises axial gaps 19, 19a. The axial gaps 19, 19a are arranged between the main part of the total number of fuel pellets 7b in the full-length fuel rods 4a and/or in the part-length fuel rods 4b.

Figure 9 shows an alternative embodiment of a preferably full-length fuel rod 4d for use in a fuel assembly of the type shown in Figure 8. Those parts of the fuel rod which correspond to corresponding parts described with reference to the embodiments described above have been given corresponding reference numerals. In the chosen embodiment, the fuel rod 4d comprises three sections designated a, b and c, respectively. The lower section a in Figure 9 has an outside diameter Da, the mid-section b has an outside diameter Db and the upper section c has an outside diameter Dc. The outside diameters Da, Db, Dc have a mutual relationship where Da>Db>Dc. Each section a, b, c comprises a column of fuel material divided into fuel pellets 7b. In a manner corresponding to that described with reference to Figures 4-7, axial gaps 19, 19a are formed between at least the main part of the total number of fuel pellets 7b.

The sections a and b are arranged fixed to each other via a section plug 24. The sections b and c are fixed to each other via a corresponding section plug with the same designation 24. The extent of the axial gap between two adjacently located sections a, b or c substantially corresponds to the axial extent of the section plug 24 and is designated 19d. In a preferred embodiment, the pellets 7b which are arranged adjacent to a section plug 24 are provided with through-holes 23 in the same way as has been described with reference to Figure 4. The pellets 7b which are arranged adjacent to a section plug 24 are provided with through-holes 23 in the same way as described with reference to Figure 4. The pellets 7b which are arranged adjacent to, respectively, a section plug 24 or a top plug 17 or a bottom plug 18 are substantially arranged so as to make close contact with these plugs by compressing the pellets column when inserting the section plug 24, the top plug 17 and the bottom plug 18, respectively.

The advantage of the embodiment of a fuel rod 4d as shown in Figure 9 is that the total axial gap 19, 19a, which is needed for thermal expansion of the fuel material and for fission gases in the respective sections a, b, c, instead of being arranged at the top of the respective section, is divided into a plurality of short axial gaps, whereby the risk of power peaks at the respective transition 19d between the sections may be considerably reduced. In those cases where axial gaps 19, 19a are arranged between each fuel pellet 7b in the column with fuel material, the risk of power peaks at the transition between the respective sections a, b, c is minimized.

## Claims

1. A fuel assembly for a light-water nuclear reactor comprising a plurality of fuel rods (4, 4b) extending between a top tie plate (5) and a bottom tie plate (6), where each fuel rod (4, 4b) comprises a cladding tube (7a) with a first and a second end, wherein the cladding tube surrounds a column of fissionable material divided into fuel pellets (7b) arranged adjacent to each other, wherein at least one fuel rod (4a, 4b, 4d) includes axial gaps (19) arranged between a majority of the fuel pellets (7b), **characterized in that** the fuel pellets (7b) which are arranged at the axial gap (19) at their respective ends facing the axial gap are provided with at least two projections (7c) extending from the end of the respective fuel pellet (7b) towards the end of the adjacently arranged fuel pellet (7b).

2. A fuel assembly according to claim 1, **characterized in that** the fuel rod (4d) which includes the axial gaps (19) between the majority of the fuel pellets (7b) comprises a plurality of sections (a, b, c) where an outside diameter of one section differs from an outside diameter of an adjacently arranged section and where fuel pellets are arranged in each section (a, b, c).

3. A fuel assembly according to claim 1, with a substantially square cross section, **characterized in that** it comprises a plurality of short fuel units (3), each one comprising at least one fuel rod (4) extending between a top tie plate (5) and a bottom tie plate (6).

4. A fuel assembly according to any of the preceding claims, **characterized in that** the projections (7c) and/or the respective ends of the fuel pellets are at least partially deformable.

5. A fuel assembly according to any of the preceding claims, **characterized in that** the number of projections (7c) at the end of each fuel pellet is at least three.

6. A fuel assembly according to any of the preceding claims, **characterized in that** the projections (7c) are made in the fissionable material.

7. A fuel assembly according to any of the preceding claims, **characterized in that** the projections (7c) are made in a metal or in a graphite material.

8. A fuel assembly according to any of the preceding claims, **characterized in that** the fuel pellets (7b) at each end are provided with a cupped shape (19a).

9. A fuel assembly according to any of the preceding claims, **characterized in that** the fuel pellets (7b) which are arranged close to the first or second end of the cladding tube (7a) are provided with through-holes (23) or with lower enrichment than the other fuel pellets (7b).

## Patentansprüche

1. Brennelement für einen Leichtwasser-Kernreaktor mit einer Vielzahl von Brennstäben (4,4b), die sich zwischen einer oberen Verbundplatte (5) und einer unteren Verbundplatte (6) erstrecken, wobei zu jedem Brennstab (4,4b) ein Hüllrohr (7a) mit einem ersten und einem zweiten Ende gehört, welches Hüllrohr eine Säule aus spaltbarem Material umgibt, die aus aneinander gereihten Brennstofftabletten (7b) besteht, wobei mindestens ein Brennstab (4a,4b,4d) zwischen einer Majorität der Brennstofftabletten (7b) achsiale Spalte (19) aufweist, **dadurch gekennzeichnet, daß** die an dem achsialen Spalt (19) angeordneten Brennstofftabletten (7b) an ihren dem achsialen Spalt zugewandten entsprechenden Enden mit mindestens zwei Vorsprüngen (7c) versehen sind, die sich von dem Ende der entsprechenden Brennstofftablette (7b) zu dem Ende der benachbart angeordneten Brennstofftablette (7b) erstrecken.

2. Brennelement nach Anspruch 1, **dadurch gekennzeichnet, daß** der Brennstab (4d), der die achsialen Spalte (19) zwischen der Majorität der Brennstofftabletten (7b) aufweist, eine Mehrzahl von Abschnitten (a,b,c) aufweist, bei denen ein Außendurchmesser eines Abschnittes sich von einem Außendurchmesser eines benachbart angeordneten Abschnittes unterscheidet und bei denen Brennstofftabletten in jedem Abschnitt (a,b,c) angeordnet sind.

3. Brennelement nach Anspruch 1 mit einem im wesentlichen quadratischen Querschnitt, **dadurch gekennzeichnet, daß** es eine Mehrzahl kurzer Brennstoffeinheiten (3) enthält, von denen jede mindestens einen Brennstab (4) enthält, der sich zwischen einer oberen Verbundplatte (5) und einer unteren Verbundplatte (6) erstreckt.

4. Brennelement nach einem der vorhergehenden Ansprüche, **dadurch gekennzeichnet, daß** die Vorsprünge (7c) und/oder die entsprechenden Enden der Brennstofftabletten mindestens teilweise verformbar sind.

5. Brennelement nach einem der vorhergehenden Ansprüche, **dadurch gekennzeichnet, daß** die Anzahl der Vorsprünge (7c) an dem Ende jeder Brennstofftablette mindestens drei beträgt.

6. Brennelement nach einem der vorhergehenden Ansprüche, **dadurch gekennzeichnet, daß** die Vorsprünge (7c) aus dem spaltbaren Material bestehen.

7. Brennelement nach einem der vorhergehenden Ansprüche, **dadurch gekennzeichnet, daß** die Vorsprünge (7c) aus einem Metall oder aus Graphitmaterial bestehen.

8. Brennelement nach einem der vorhergehenden Ansprüche, **dadurch gekennzeichnet, daß** die Brennstofftabletten (7b) an jedem Ende eine becherförmige Gestalt (19a) haben.

9. Brennelement nach einem der vorhergehenden Ansprüche, **dadurch gekennzeichnet, daß** die Brennstofftabletten (7b), die dicht an dem ersten oder zweiten Ende des Hüllrohres (7a) liegen, mit durchgehenden Löchern (23) oder mit einer geringeren Anreicherung als die übrigen Brennstofftabletten (7b) versehen sind.

## Revendications

1. Assemblage combustible pour un réacteur nucléaire à eau légère comprenant une pluralité de crayons (4a, 4b) combustibles s'étendant entre une plaque (5) d'attache supérieure et une plaque (6) d'attache inférieure. chaque crayon (4, 4b) combustible comprenant un tube (7a) de gainage ayant une première et une seconde extrémité, le tube de gainage entourant une colonne de matière fissile subdivisée en pastilles (7b) combustibles, disposées à côté les unes des autres, dans lequel au moins un crayon (4a, 4b, 4d) combustible comporte des intervalles (19) axiaux interposés entre la majorité des pastilles (7b) combustibles,
**caractérisé en ce que** les pastilles (7b) combustibles qui sont disposées dans l'intervalle (19) axial sont munies à leur extrémité respective, faisant face à l'intervalle axial, d'au moins deux saillies (7c) allant, de l'extrémité de la pastille (7b) combustible respective, à l'extrémité de la pastille (7b) combustible disposée à côté.

2. Assemblage combustible suivant la revendication (1),
**caractérisé en ce que** le crayon (4d) combustible qui comprend les intervalles (19) axiaux entre la majorité des pastilles (7b) combustibles comprend une pluralité de sections (a, b, c) dans lesquelles un diamètre extérieur d'une section diffère d'un diamètre extérieur d'une section disposée à côté et dans lequel des pastilles combustibles sont disposées dans chaque section (a, b, c).

3. Assemblage combustible suivant la revendication 1, de section transversale sensiblement carrée, **caractérisé en ce qu'**il comprend une pluralité d'unités (3) combustibles, chacune comprenant au moins un crayon (4) combustible s'étendant entre une plaque (5) d'attache supérieure et une plaque (6) d'attache inférieure.

4. Assemblage combustible suivant l'une quelconque des revendications précédentes,
**caractérisé en ce que** les saillies (7c) et/ou les extrémités respectives des pastilles combustibles sont déformables au moins en partie.

5. Assemblage combustible suivant l'une quelconque des revendications précédentes,
**caractérisé en ce que** le nombre des saillies (7c) à l'extrémité de chaque pastille combustible est d'au moins 3.

6. Assemblage combustible suivant l'une quelconque des revendications précédentes,
**caractérisé en ce que** les saillies (7c) sont en la matière fissile.

7. Assemblage combustible suivant l'une quelconque des revendications précédentes,
**caractérisé en ce que** les saillies (7c) sont en un métal ou en un graphite.

8. Assemblage combustible suivant l'une quelconque des revendications précédentes,
**caractérisé en ce que** les pastilles (7b) combustibles sont à chaque extrémité munies d'une forme (19a) en coupelle.

9. Assemblage combustible suivant l'une quelconque des revendications précédentes,
**caractérisé en ce que** les pastilles (7b) combustibles qui sont disposées à proximité de la première ou de la seconde extrémité du tube (7a) de gainage sont munies de trous (23) traversants ou sont moins enrichies que les autres pastilles (7b) combustibles.
